# EUROPEAN PATENT APPLICATION

(11) **EP 4 761 136 A1**
(43) Date of publication of application: **17.06.2026**
(21) Application number: 25172586.7
(22) Date of filing: 25.04.2025
(51) Int. Cl.: H04B 7/185

(54) **ANTENNA CONTROL METHOD AND ANTENNA SYSTEM**

(30) Priority: 10.12.2024 TW 113147773
(71) Applicant: Auden Techno Corp., Taoyuan City 334 (TW)
(72) Inventor: CHEN, Guan-Yi, 334 Taoyuan City (TW); PAN, Jen-Yi, 334 Taoyuan City (TW); TSAI, Tsung-Hua, 334 Taoyuan City (TW)
(74) Representative: Viering, Jentschura & Partner mbB Patent- und Rechtsanwälte

(57) **Abstract**

An antenna control method including: receiving signal strength data sets from satellites based on an initial transmission and reception direction data set; establishing a candidate list from the signal strength data sets by using a minimum strength threshold; selecting a satellite having a largest signal strength data set from the candidate list to define as a target object; when the target object's signal strength data set is below a predetermined strength threshold, switching to another one of the satellites as the target object; when the target object's signal strength data set exceeds the predetermined strength threshold, obtaining a baseband signal data set of the target object for subspace tracking to obtain a principal eigenvector data set and a principal eigenvalue data set; and inputting the principal eigenvector data set and the principal eigenvalue data set into an ESPRIT to obtain a DOA data set for tracking the target object.

## Description

### FIELD OF THE INVENTION

The present invention relates to a control method, and more particularly to an antenna control method and an antenna system.

### BACKGROUND OF THE INVENTION

Mobile platforms often require communication with a plurality of satellites during movement (e.g., satellite positioning, satellite networking). Therefore, the mobile platforms are equipped with an antenna system configured to track satellite signals. However, a computational efficiency of conventional antenna systems in determining satellite positions is suboptimal, especially for maritime mobile platforms that experience both horizontal and vertical variations. Therefore, beams of the conventional antenna systems fail to align with the satellites and often result in poor transmission efficiency.

### SUMMARY OF THE INVENTION

In response to the above-referenced technical inadequacy, the present invention provides an antenna control method and an antenna system.

In order to solve the above-mentioned problems, one of the technical aspects adopted by the present invention is to provide an antenna control method applied to an antenna system. The control method includes: loading an initial transmission and reception direction data set; receiving a plurality of signal strength data sets from a plurality of satellites through an array antenna based on the initial transmission and reception direction data set; establishing a candidate list from the signal strength data sets by using a minimum strength threshold; selecting one of the satellites that has a largest one of the signal strength data sets from the candidate list to define as a target object; when the signal strength data set of the target object is less than a predetermined strength threshold, switching to another one of the satellites from the candidate list as the target object; when the signal strength data set of the target object is greater than the predetermined strength threshold, obtaining a baseband signal data set of the target object by the array antenna and inputting the baseband signal data set into a subspace tracking method to obtain a principal eigenvector data set and a principal eigenvalue data set; inputting the principal eigenvector data set and the principal eigenvalue data set into an Estimation of Signal Parameters via Rotational Invariance Techniques (ESPRIT) to obtain a Direction of Arrival (DOA) data set of the target object; and adjusting a beam based on the DOA data set to track the target object.

In order to solve the above-mentioned problems, another one of the technical aspects adopted by the present invention is to provide an antenna control method applied to an antenna system. The antenna control method includes: loading an initial transmission and reception direction data set; receiving a plurality of signal strength data sets from a plurality of satellites through an array antenna based on the initial transmission and reception direction data set; establishing a candidate list from the signal strength data sets by using a minimum strength threshold; selecting one of the satellites that has a largest one of the signal strength data sets from the candidate list to define as a target object; when the signal strength data set of the target object is less than a predetermined strength threshold, switching to another one of the satellites from the candidate list as the target object; when the signal strength data set of the target object is greater than the predetermined strength threshold, dividing a plurality of antennas of the array antenna into a plurality of operational sub-arrays, and obtaining a plurality of baseband signal data sets of the target object respectively through the operational sub-arrays; inputting each of the baseband signal data sets into a subspace tracking method to obtain a principal eigenvector data set and a principal eigenvalue data set; inputting the principal eigenvector data set and the principal eigenvalue data set into an Estimation of Signal Parameters via Rotational Invariance Techniques (ESPRIT) to obtain a Direction of Arrival (DOA) data set of the target object; and adjusting a beam based on the DOA data set to track the target object.

In order to solve the above-mentioned problems, yet another one of the technical aspects adopted by the present invention is to provide an antenna system. The antenna system includes an array antenna, a dynamic adjustment module, a tracking module, and a computation module. The array antenna is configured to receive from a plurality of satellites to obtain a plurality of signal strength data sets. The dynamic adjustment module is connected to the array antenna. The dynamic adjustment module is configured to control the array antenna to face one of the satellites based on an initial transmission and reception direction data set and a Direction of Arrival (DOA) data set. The tracking module is connected to the array antenna and the dynamic adjustment module. When the dynamic adjustment module loads the initial transmission and reception direction data set, the tracking module is configured to establish a candidate list from the signal strength data sets by using a minimum strength threshold and to select one of the satellites that has a largest one of the signal strength data sets from the candidate list to define as a target object. When the tracking module detects that the signal strength data set of the target object is less than a predetermined strength threshold, the tracking module switches to another one of the satellites from the candidate list as the target object. When the tracking module detects that the signal strength data set of the target object is greater than the predetermined strength threshold, the tracking module outputs a computation command. The computation module is connected to the array antenna, the tracking module, and the dynamic adjustment module. When the computation module receives the computation command, the computation module obtains a baseband signal data set of the target object by the array antenna and inputs the baseband signal data set into a subspace tracking method to obtain a principal eigenvector data set and a principal eigenvalue data set. The computation module inputs the principal eigenvector data set and the principal eigenvalue data set into an Estimation of Signal Parameters via Rotational Invariance Techniques (ESPRIT) to obtain a Direction of Arrival (DOA) data set of the target object. The computation module replaces the initial transmission and reception direction data set with the DOA data set, so that the dynamic adjustment module controls the array antenna to face the target object based on the DOA data set.

In order to solve the above-mentioned problems, still yet another one of the technical aspects adopted by the present invention is to provide an antenna system. The antenna system includes an array antenna, a dynamic adjustment module, a tracking module, and a computation module. The array antenna is configured to receive from a plurality of satellites to obtain a plurality of signal strength data sets. The array antenna includes a plurality of operational sub-arrays, and each of the operational sub-arrays has a plurality of antennas. The dynamic adjustment module is connected to the array antenna. The dynamic adjustment module is configured to control the array antenna to face one of the satellites based on an initial transmission and reception direction data set and a Direction of Arrival (DOA) data set. The tracking module is connected to the array antenna and the dynamic adjustment module. When the dynamic adjustment module loads the initial transmission and reception direction data set, the tracking module is configured to establish a candidate list from the signal strength data sets by using a minimum strength threshold and to select one of the satellites that has a largest one of the signal strength data sets from the candidate list to define as a target object. When the tracking module detects that the signal strength data set of the target object is less than a predetermined strength threshold, the tracking module switches to another one of the satellites from the candidate list as the target object. When the tracking module detects that the signal strength data set of the target object is greater than the predetermined strength threshold, the tracking module outputs a computation command. The computation module is connected to the array antenna, the tracking module, and the dynamic adjustment module. When the computation module receives the computation command, the computation module obtains a plurality of baseband signal data sets of the target object respectively using the operational sub-arrays and inputs the baseband signal data sets into a subspace tracking method to respectively obtain a principal eigenvector data set and a principal eigenvalue data set. The computation module inputs the principal eigenvector data set and the principal eigenvalue data set into an Estimation of Signal Parameters via Rotational Invariance Techniques (ESPRIT) to obtain a Direction of Arrival (DOA) data set of the target object. The computation module replaces the initial transmission and reception direction data set with the DOA data set, so that the dynamic adjustment module controls the array antenna to face the target object based on the DOA data set.

Therefore, in the antenna control method and the antenna system provided by the present invention, by virtue of "inputting the baseband signal data set into a subspace tracking method to obtain a principal eigenvector data set and a principal eigenvalue data set," and "inputting the principal eigenvector data set and the principal eigenvalue data set into an ESPRIT to obtain a DOA data set of the target object," the antenna control method and antenna system can more promptly compute the current satellite positions to perform signal tracking.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a flowchart of an antenna control method according to a first embodiment of the present invention;
FIG. 2 is another flowchart of the antenna control method according to the first embodiment of the present invention;
FIG. 3 is a circuit block diagram of an antenna system according to a second embodiment of the present invention;
FIG. 4 is a flowchart of the antenna control method according to a third embodiment of the present invention;
FIG. 5 is a circuit block diagram of the antenna system according to a fourth embodiment of the present invention;
FIG. 6A is a flowchart of the antenna control method according to a fifth embodiment of the present invention; and
FIG. 6B is another flowchart of the antenna control method according to the fifth embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

### [First Embodiment]

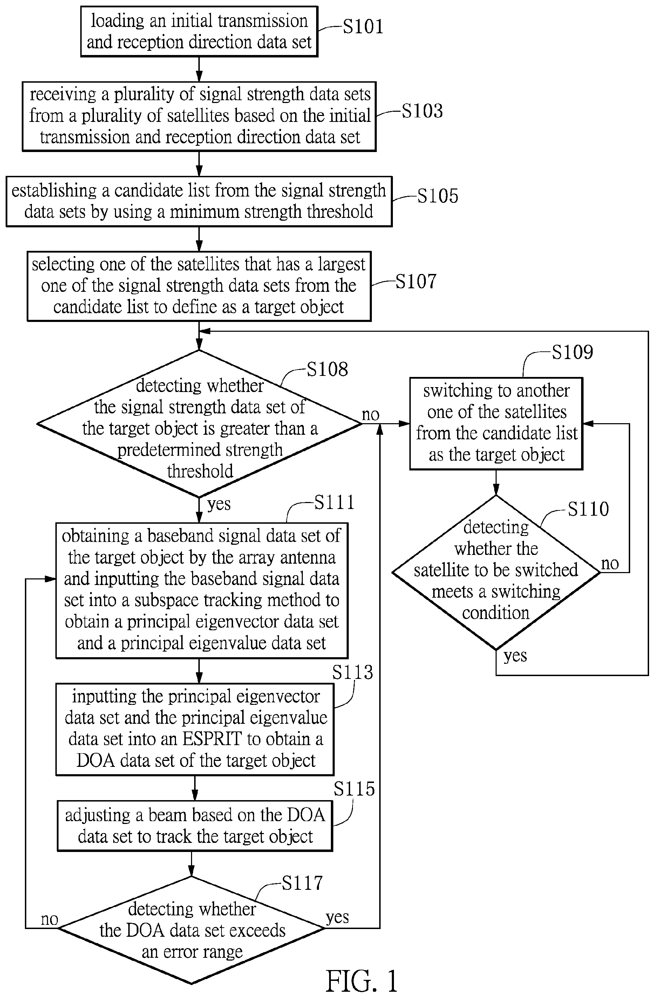

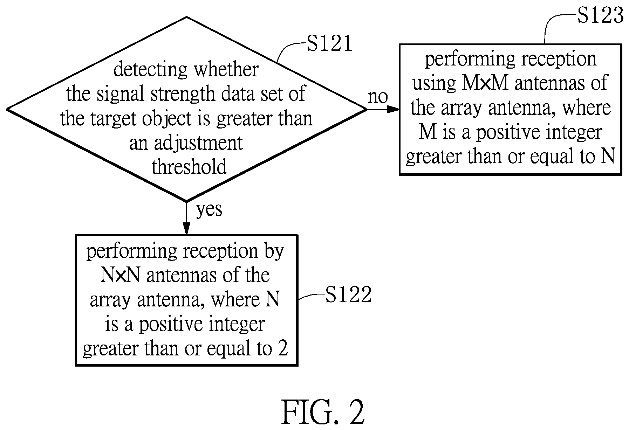

Referring to FIG. 1 and FIG. 2, a first embodiment of the present invention provides an antenna control method. The antenna control method is configured to be applied to an antenna system 100, so that the antenna system 100 more efficiently calculates an optimal satellite (position) for tracking. The antenna control method includes step S 101 to step S123.

It should be noted that any of the aforementioned steps can be omitted or replaced with a reasonable variation based on practical requirements. The following paragraphs introduce the steps of the antenna control method.

The step S101 is implemented by loading an initial transmission and reception direction data set. In practice, an establishment of the initial transmission and reception direction data set can be based on an ephemeris data set. Specifically, the antenna system 100 reads the ephemeris data set and searches for the position of at least one satellite near the location of the antenna system 100 to establish the initial transmission and reception direction data set. Naturally, a method of establishing the initial transmission and reception direction data set is not limited thereto. For example, the initial transmission and reception direction data set can be preset as a zenith orientation of the current position of the antenna system 100.

The step S103 is implemented by receiving a plurality of signal strength data sets from a plurality of satellites (not shown) through an array antenna 1 (of the antenna system 100) based on the initial transmission and reception direction data set. Preferably, each of the signal strength data sets can be a signal-to-noise ratio (SNR), a carrier-to-noise ratio (CNR), a carrier-to-interference-plus-noise ratio (CINR), a received signal strength indicator (RSSI), or a signal-to-interference-plus-noise ratio (SINR).

In practice, each of the signal strength data sets can be obtained using eigenvalue decomposition.

The step S105 is implemented by establishing a candidate list from the signal strength data sets by using a minimum strength threshold. In detail, the antenna system 100, which is configured on a mobile platform, continuously experiences positional variations relative to the satellites. Therefore, the minimum strength threshold is established based on a lowest tolerable value that the antenna system 100 can effectively utilize. That is, the minimum strength threshold can be adjusted under different conditions (e.g., the hardware specifications of the antenna system 100). More specifically, since an excessively weak signal strength prevents the accurate estimation of a Direction of Arrival (DOA) data set used for determining the direction of the satellites, the minimum strength threshold refers to the lowest standard at which the antenna system 100, after computation via a subspace tracking method and Estimation of Signal Parameters via Rotational Invariance Techniques (ESPRIT), can sufficiently calculate the DOA data set.

Accordingly, the candidate list can record the satellites that have an ideal signal strength relative to the position of the antenna system 100.

The step S107 is implemented by selecting one of the satellites that has a largest one of the signal strength data sets from the candidate list to define as a target object. In other words, the antenna system 100 first selects one of the satellites with the strongest signal from the candidate list as the target for subsequent operations.

The step S108 is implemented by detecting whether the signal strength data set of the target object is greater than a predetermined strength threshold. In detail, the predetermined strength threshold is established as a reasonable value that the antenna system 100 can effectively utilize. That is, the predetermined strength threshold is greater than the minimum strength threshold.

When the signal strength data set of the target object is less than the predetermined strength threshold, the step S 109 is executed. Conversely, when the signal strength data set of the target object is greater than the predetermined strength threshold, the step S111 is executed.

The step S109 is implemented by switching to another one of the satellites from the candidate list as the target object. In detail, since the position of the antenna system 100 relative to the satellites is continuously changing, the satellite selected as the target object from the candidate list may not always have the optimal signal strength. Therefore, the antenna system 100 needs to switch to another one of the satellites from the candidate list as the new target object.

The step S111 is implemented by obtaining a baseband signal data set of the target object by the array antenna 1 and inputting the baseband signal data set into a subspace tracking method to obtain a principal eigenvector data set and a principal eigenvalue data set. It should be noted that, in the present embodiment, the subspace tracking method adopts the Fast Approximate Power Iteration (FAPI). The subspace tracking method will be described below using FAPI, but the present invention is not limited thereto. For example, the FAPI can also be replaced with other subspace tracking methods, such as Modified Fast Approximate Power Iteration (MFAPI), Fast Data Projection Method (FDPM), or Projection Approximation Subspace Tracking (PAST).

Additionally, in practice, the baseband signal data set can be obtained by performing a down-conversion process on the received narrowband digitally modulated signal. That is, the baseband signal data set is acquired through a signal processing unit that processes the received raw satellite signal data set (e.g., narrowband digitally modulated signal) by performing frequency conversion, filtering, and analog-to-digital conversion (ADC).

The step S113 is implemented by inputting the principal eigenvector data set and the principal eigenvalue data set into an Estimation of Signal Parameters via Rotational Invariance Techniques (ESPRIT) to obtain a Direction of Arrival (DOA) data set of the target object. The DOA data set can be represented using azimuth, elevation, or boresight.

The step S115 is implemented by adjusting a beam based on the DOA data set to track the target object.

Preferably, the antenna control method further includes the following steps:

The step S117 is implemented by detecting whether the DOA data set exceeds an error range. The error range refers to whether an actual orientation of the satellite and the DOA data set that is computed fall within the half-power beam width (HPBW). However, in actual operation, the error range cannot be directly obtained and is processed using an alternative method. For example, the energy of a projection matrix is calculated by projecting an orthogonal matrix and a steering matrix outputted by FAPI. A threshold for the energy of the projection matrix is set to ensure the accuracy of the direction data set that is obtained.

Additionally, when the DOA data set exceeds the error range, another one of the satellites from the candidate list is switched as the target object (i.e., step S109 is implemented again). Conversely, when the DOA data set is within the error range, the baseband signal data set of the target object is updated, and the DOA data set is calculated to adjust the beam for tracking the target object (i.e., the steps S111 to S115 are implemented again). It should be specifically noted that, in ESPRIT, the DOA data set is estimated based on the baseband signal data set that is received. However, when the antenna system 100 inputs the principal eigenvector data set into ESPRIT, the antenna system 100 encounters issues of high computational load and time consumption, especially in multi-signal source scenarios, which increases computation time and processing power requirements.

In contrast, FAPI is an efficient algorithm used for rapidly estimating the eigenvalues and eigenvectors of a matrix. Therefore, the application of FAPI can significantly improve the efficiency of eigenvalue decomposition. In this context, FAPI approximates the principal eigenvalue and eigenvector of a matrix through a fast approximation approach, so as to reduce computation time.

Generally, in the process of applying FAPI to ESPRIT, FAPI is used to identify the principal eigenvalue and the corresponding eigenvector of the baseband signal data set, and the corresponding eigenvector are then further utilized in ESPRIT to obtain the DOA data set.

To compare the computation time when using ESPRIT alone and the computation time when applying FAPI to ESPRIT, Table 1 presents the time results of actual computation examples. The symbol O stands for Big O notation, the symbol N stands for a number of rows in the antenna array, the symbol M stands for a number of columns in the antenna array, and the symbol r stands for a number of satellite signals.

**Table 1:**

| Algorithm | ESPRIT | FAPI & ESPRIT |
|---|---|---|
| Root Mean Square Error | 0.00328 | 0.308 |
| Time Complexity | O((NM)3+(NM)2r2+NM +NM*log(NM)+2r+1) | O(5r2+8r+3MNr+2NM+ 1) |
| Average Loss | 0 times | 1.2 times |
| Sampling Interval | 1 second | 1 second |
| Total Number of Samples | 2395 times | 2395 times |
| Average Execution Time | 0.145 seconds | 0.015 seconds |

From Table 1, it can be observed that although the root mean square error (RMSE) of performing calculations using ESPRIT alone is lower than that of applying FAPI to ESPRIT, and an average loss occurs when applying FAPI to ESPRIT, these results, however, have minimal impact on the accuracy of the antenna system 100 in tracking satellites. In contrast, since the average execution time of applying FAPI to ESPRIT is significantly lower than that of using ESPRIT alone (especially as the number of antennas increases, the relative difference in average execution time becomes more pronounced), the update frequency of the antenna system 100 in tracking satellites can be more frequent, so as to achieve a satellite tracking effect that is closer to real-time and more accurate.

Additionally, it should be noted that when the antenna system 100 is in a highly dynamic environment, the antenna system 100 frequently switches during the process of tracking the target object. For example, in a maritime environment, the movement of a vessel affects the antenna system, and the variations in the signal strength data set (e.g., SNR) are more drastic than the variations of the antenna system on land, so as to cause a ping-pong effect in switching. Therefore, the antenna control method can further include the step S110.

The step S 110 is implemented by detecting whether the satellite to be switched meets a switching condition. When the satellite to be switched meets the switching condition, the satellite to be switched is switched to be the target object (i.e., re- implementing the step S108 for detection). When the satellite to be switched does not meet the switching condition, the satellite to be switched does not replace the target object. (i.e., re- implementing the step S109 to select another one of the satellites). The switching condition is that the signal strength data set of another one of the satellites at each time point within a predetermined time interval is greater than the signal strength data set of the target object before switching.

For example, during the switching process of the antenna system 100, the signal strength data set of the satellite (i.e., another one of the satellites) to be switched must be continuously superior to the signal strength data set of the current satellite (i.e., the target object) for 5 seconds (i.e., the predetermined time interval) before the switch is implemented.

Furthermore, when the antenna system 100 has determined the target object, the antenna system 100 can implement specific steps of the antenna control method to prioritize either speed or accuracy as the primary performance indicator. Specifically, the antenna control method further includes the step S121 to the step S 123.

The step S121 is implemented by detecting whether the signal strength data set of the target object is greater than an adjustment threshold. When the signal strength data set of the target object is greater than the adjustment threshold, the step S 122 is implemented. When the signal strength data set of the target object is less than the adjustment threshold, the step S 123 is implemented.

The step S122 is implemented by performing reception by N×N antennas of the array antenna, where N is a positive integer greater than or equal to 2. That is, when the signal received by the antenna system 100 is sufficiently strong, the antenna system 100 needs to prioritize faster tracking speed (i.e., computation speed) to enable more frequent updates for satellite tracking.

The step S123 is implemented by performing reception using M×M antennas of the array antenna, where M is a positive integer greater than or equal to N. That is, when the signal received by the antenna system 100 is too weak, the antenna system 100 needs to prioritize higher accuracy in determining the position of the target object.

For example, the array antenna has 16×16 antennas. When the signal strength data set of the target object is greater than the adjustment threshold, 8×8 antennas of the array antenna are used. Using 8×8 antennas enables the antenna system 100 to achieve a faster computation speed compared to using 16×16 antennas. However, the half-power beam width (HPBW) of the antenna system 100 is increased.

Conversely, when the signal strength data set of the target object is less than the adjustment threshold, 16×16 antennas of the array antenna are used. The antenna system 100, by using 16×16 antennas instead of 8×8 antennas, can obtain a more precise DOA data set. However, the computation time required by the antenna system 100 is increased.

### [Second Embodiment]

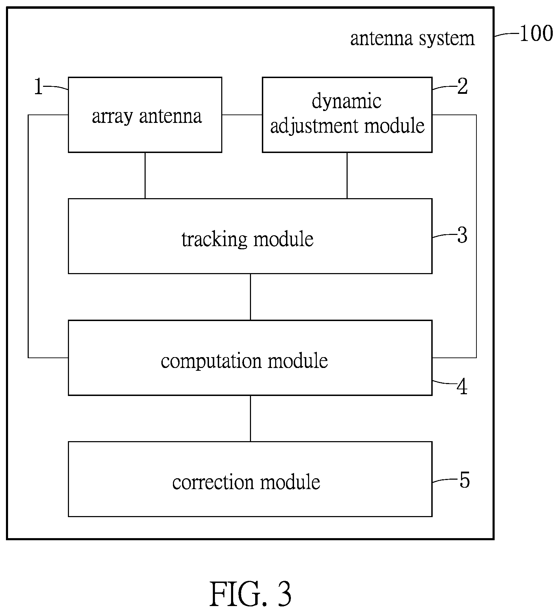

Referring to FIG. 3, a second embodiment of the present invention provides an antenna system 100 configured to implement the antenna control method of the first embodiment. In other words, the operational relationships of the components of the antenna system 100 can be appropriately coordinated with the description of the first embodiment. The following description describes the structure and connection relation of each component of the antenna system 100.

The antenna system 100 includes an array antenna 1, a dynamic adjustment module 2 connected to the array antenna 1, a tracking module 3 connected to the array antenna 1 and the dynamic adjustment module 2, and a computation module 4 that is connected to the array antenna 1, the tracking module 3 and the dynamic adjustment module 2.

The array antenna 1 is configured to receive from a plurality of satellites to obtain a plurality of signal strength data sets. Preferably, each of the signal strength data sets can be a signal-to-noise ratio (SNR), a carrier-to-noise ratio (CNR), a carrier-to-interference-plus-noise ratio (CINR), a received signal strength indicator (RSSI), or a signal-to-interference-plus-noise ratio (SINR).

The dynamic adjustment module is configured to control the array antenna to face one of the satellites based on an initial transmission and reception direction data set and a Direction of Arrival (DOA) data set. In practice, the dynamic adjustment module 2 establishes the initial transmission and reception direction data set by using an ephemeris data set, but the present invention is not limited thereto. For example, the initial transmission and reception direction data set can also be preset as the current zenith direction of the array antenna 1.

When the dynamic adjustment module 2 loads the initial transmission and reception direction data set, the tracking module 3 is configured to establish a candidate list from the signal strength data sets by using a minimum strength threshold and to select a largest one of the signal strength data sets from the candidate list to define as a target object.

When the tracking module 3 detects that the signal strength data set of the target object is less than a predetermined strength threshold, the tracking module 3 switches to another one of the satellites from the candidate list as the target object. Conversely, when the tracking module 3 detects that the signal strength data set of the target object is greater than the predetermined strength threshold, the tracking module 3 outputs a computation command.

When the computation module 4 receives the computation command, the computation module 4 obtains a baseband signal data set of the target object by the array antenna 1, and inputs the baseband signal data set into a subspace tracking method to obtain a principal eigenvector data set and a principal eigenvalue data set.

Additionally, the computation module 4 is configured to input the principal eigenvector data set and the principal eigenvalue data set into an Estimation of Signal Parameters via Rotational Invariance Techniques (ESPRIT) to obtain the DOA data set of the target object.

Accordingly, the computation module 4 is configured to replace the initial transmission and reception direction data set with the DOA data set, so that the dynamic adjustment module 2 controls the array antenna 1 to face the target object based on the DOA data set.

Additionally, when the antenna system 100 is in a highly dynamic environment, the antenna system 100 frequently switches during the process of tracking the target object. Therefore, the tracking module 3 switches to another one of the satellites as the target object when a switching condition is satisfied. The switching condition is that the signal strength data set of another one of the satellites at each time point within a predetermined time interval is greater than the signal strength data set of the target object before switching.

Additionally, to ensure continuous tracking of the optimal satellites, the antenna system 100 can further include a correction module 5 electrically coupled to the computation module 4 and the dynamic adjustment module 2.

Specifically, the correction module 5 is configured to detect whether the DOA data set exceeds an error range.

When the correction module 5 detects that the DOA data set exceeds the error range, the correction module 5 outputs a correction command to the dynamic adjustment module 2, so that the dynamic adjustment module 2 switches to another one of the satellites from the candidate list as the target object. Conversely, when the correction module 5 detects that the DOA data set is within the error range, the correction module 5 outputs a continuation command to the computation module 4, so that the computation module 4 updates the baseband signal data set of the target object, and calculates the DOA data set to adjust the beam for tracking the target object.

Preferably, based on the current state of the antenna system 100, either speed or accuracy is optimized.

The computation module 4 is configured to output a first adjustment command to the array antenna 1 when the signal strength data set of the target object is greater than an adjustment threshold, or output a second adjustment command to the array antenna 1 when the signal strength data set of the target object is less than the adjustment threshold. Accordingly, when the array antenna 1 receives the first adjustment command, the array antenna 1 performs reception using N×N antennas, where N is a positive integer greater than or equal to 2. When the array antenna 1 receives the second adjustment command, the array antenna 1 performs reception using M×M antennas, where M is a positive integer greater than or equal to N. That is, the array antenna 1 performs reception using either a small-scale array or a large-scale array based on the first adjustment command and the second adjustment command.

### [Third Embodiment]

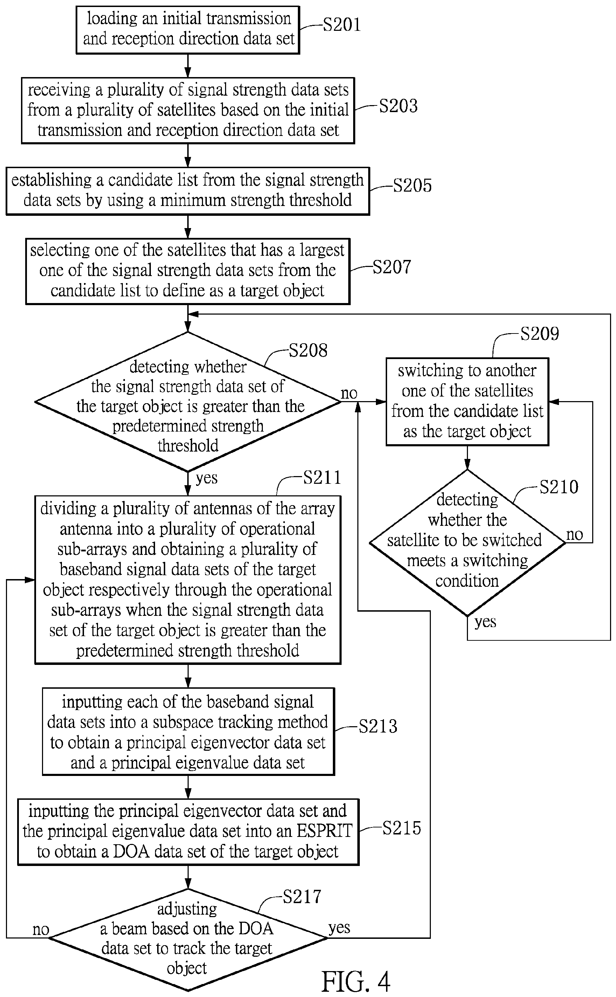

Referring to FIG. 4, a third embodiment of the present invention provides an antenna control method. The present embodiment is similar to the first embodiment, and the similarities between the present embodiment and the first embodiment will not be repeated herein. The antenna control method of the present embodiment includes steps S201 to S217. The steps S201 to S210 of the present embodiment are generally similar to steps S101 to S110 of the first embodiment. The difference between the present embodiment and the first embodiment mainly resides in that the array antenna 1 is divided into a plurality of operational sub-arrays 11 to obtain a plurality of baseband signal data sets of the target object. The baseband signal data sets are used to obtain a plurality of DOA data sets for tracking operations. The detailed descriptions of steps S208 and S211 to S217 are as follows:
The step S208 is implemented by detecting whether the signal strength data set of the target object is greater than the predetermined strength threshold. When the signal strength data set of the target object is less than the predetermined strength threshold, the step S209 is implemented. Conversely, when the signal strength data set of the target object is greater than the predetermined strength threshold, the step S211 is implemented.
The step S211 is implemented by dividing a plurality of antennas of the array antenna 1 into a plurality of operational sub-arrays and obtaining a plurality of baseband signal data sets of the target object respectively through the operational sub-arrays when the signal strength data set of the target object is greater than the predetermined strength threshold.
The step S213 is implemented by inputting each of the baseband signal data sets into a subspace tracking method to obtain a principal eigenvector data set and a principal eigenvalue data set.
The step S215 is implemented by inputting the principal eigenvector data set and the principal eigenvalue data set into an Estimation of Signal Parameters via Rotational Invariance Techniques (ESPRIT) to obtain a Direction of Arrival (DOA) data set of the target object.
The step S217 is implemented by adjusting a beam based on the DOA data set to track the target object.

The antenna control method can be configured to select and load one of the DOA data sets based on an operational sequence to adjust the beam. In practice, the operational sequence can be established based on the values of the signal strength data sets. For example, the DOA data set corresponding to the signal strength data set with the highest value is given the highest priority for beam adjustment. The DOA data set corresponding to the signal strength data set with the second-highest value is given the second priority for beam adjustment, and so on. Naturally, the operational sequence can also be adjusted based on a specific condition. For example, the values of the signal strength data sets can be arranged in an interleaved manner to establish the operational sequence. For example, when the values of four signal strength data sets are 5, 7, 9, and 3, the operational sequence can be arranged as: 9, 3, 7, 5. In detail, factors such as the common tolerances of the array antenna, material non-uniformity, and assembly errors can affect the accuracy of the DOA data set calculated by the ESPRIT algorithm. The factors may lead to errors in beam direction adjustment. Therefore, in the present embodiment, the antenna control method reduces the impact of overall phase deviation to a certain extent and shortens the overall beam adjustment time by partitioning the array antenna.

### [Fourth Embodiment]

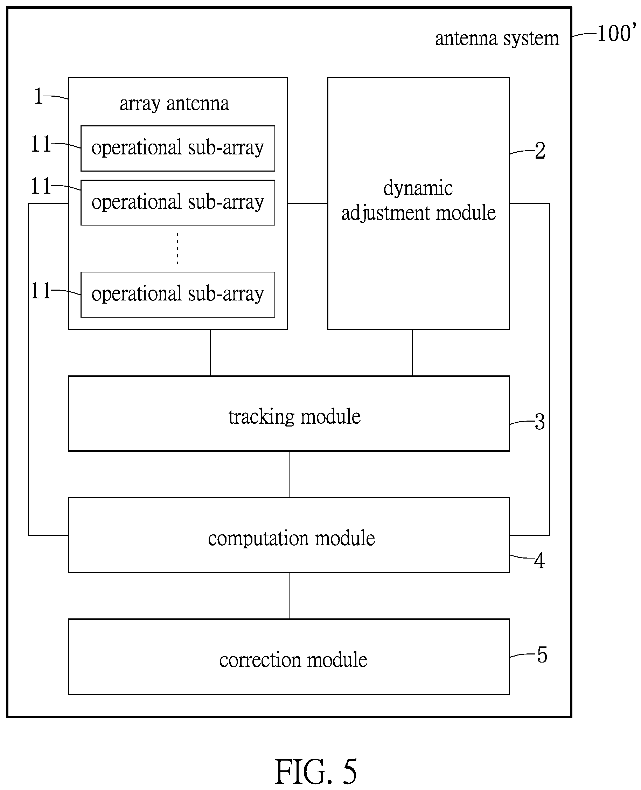

Referring to FIG. 5, a fourth embodiment of the present invention provides an antenna system 100' configured to execute the antenna control method of the third embodiment. The present embodiment is similar to the second embodiment. That is, the operational relationships of the components of the antenna system 100' can be appropriately coordinated with the descriptions of the second and third embodiments. The following description describes the structure and connection relation of each component of the antenna system 100.

The antenna system 100' includes an array antenna 1, a dynamic adjustment module 2 connected to the array antenna 1, a tracking module 3 connected to the array antenna 1 and the dynamic adjustment module 2, and a computation module 4 that is connected to the array antenna 1, the tracking module 3 and the dynamic adjustment module 2.

The array antenna 1 is configured to receive from a plurality of satellites to obtain a plurality of signal strength data sets. Preferably, each of the signal strength data sets can be a signal-to-noise ratio (SNR), a carrier-to-noise ratio (CNR), a carrier-to-interference-plus-noise ratio (CINR), a received signal strength indicator (RSSI), or a signal-to-interference-plus-noise ratio (SINR). The array antenna 1 includes a plurality of operational sub-arrays 11, and each of the operational sub-arrays 11 has a plurality of antennas.

The dynamic adjustment module 2 is configured to control the array antenna to face one of the satellites based on an initial transmission and reception direction data set and a Direction of Arrival (DOA) data set.

When the dynamic adjustment module 2 loads the initial transmission and reception direction data set, the tracking module 3 is configured to establish a candidate list from the signal strength data sets by using a minimum strength threshold and to select a largest one of the signal strength data sets from the candidate list to define as a target object.

When the tracking module 3 detects that the signal strength data set of the target object is less than a predetermined strength threshold, the tracking module 3 switches to another one of the satellites from the candidate list as the target object. Conversely, when the tracking module 3 detects that the signal strength data set of the target object is greater than the predetermined strength threshold, the tracking module 3 outputs a computation command.

When the computation module 4 receives the computation command, the computation module 4 obtain a plurality of baseband signal data sets of the target object by using a plurality of the operational sub-arrays 11 and inputs the baseband signal data sets into a subspace tracking method to obtain a principal eigenvector data set and a principal eigenvalue data set.

Additionally, the computation module 4 is configured to input the principal eigenvector data set and the principal eigenvalue data set into an Estimation of Signal Parameters via Rotational Invariance Techniques (ESPRIT) to obtain the DOA data set of the target object.

Accordingly, the computation module 4 is configured to replace the initial transmission and reception direction data set with the DOA data set, so that the dynamic adjustment module 2 controls the array antenna 1 to face the target object based on the DOA data set.

Preferably, the computation module 4 compares the signal strength data sets to establish an operational sequence and inputs the corresponding DOA data set to replace the initial transmission and reception direction data set, based on the operational sequence.

### [Fifth Embodiment]

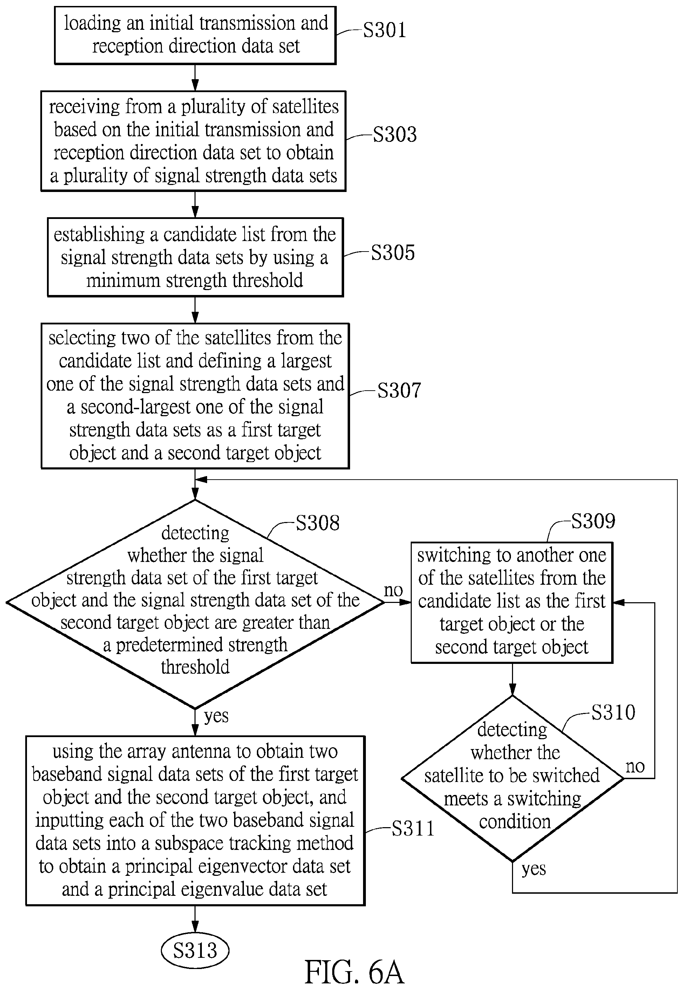

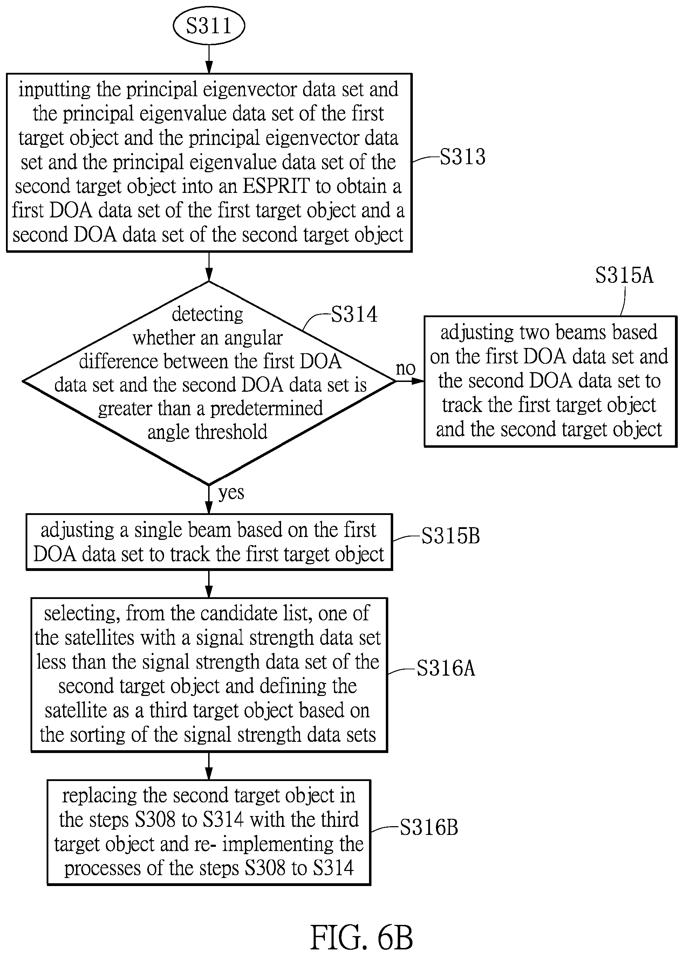

Referring to FIG. 6A and FIG. 6B, a fifth embodiment of the present invention provides an antenna control method. The present embodiment is similar to the first embodiment.

The step S301 is implemented by loading an initial transmission and reception direction data set.

The step S303 is implemented by using an array antenna to receive from a plurality of satellites based on the initial transmission and reception direction data set to obtain a plurality of signal strength data sets.

The step S305 is implemented by establishing a candidate list from the signal strength data sets by using a minimum strength threshold.

The step S307 is implemented by selecting two of the satellites from the candidate list and defining a largest one of the signal strength data sets and a second-largest one of the signal strength data sets as a first target object and a second target object. In the present embodiment, the first target object is the one with the largest signal strength data set, and the second target object is the one with the second-largest signal strength data set, but the present invention is not limited thereto.

The step S308 is implemented by detecting whether the signal strength data set of the first target object and the signal strength data set of the second target object are greater than a predetermined strength threshold.

When the signal strength data sets of the first target object and the second target object are less than the predetermined strength threshold (i.e., the signal strength data set of the first target object and the signal strength data set of the second target object are both less than the predetermined strength threshold), the step S309 is implemented. Conversely, when the signal strength data set of the first target object or the second target object is greater than the predetermined strength threshold (i.e., one of the signal strength data sets of the first target object or the second target object is less than the predetermined strength threshold), the step S311 is implemented.

The step S309 is implemented by switching to another one of the satellites from the candidate list as the first target object or the second target object. For example, when the signal strength data set of the first target object is greater than the predetermined strength threshold, another one of the satellites from the candidate list is switched as the first target object. Naturally, after the step S309, the step S310 can follow, similar to the step S110 of the first embodiment. That is, the step S310 is implemented by detecting whether the satellite to be switched meets a switching condition.

The step S311 is implemented by using the array antenna to obtain two baseband signal data sets of the first target object and the second target object, and inputting each of the two baseband signal data sets into a subspace tracking method to obtain a principal eigenvector data set and a principal eigenvalue data set.

The step S313 is implemented by inputting the principal eigenvector data set and the principal eigenvalue data set of the first target object and the principal eigenvector data set and the principal eigenvalue data set of the second target object into an Estimation of Signal Parameters via Rotational Invariance Techniques (ESPRIT) to obtain a first DOA data set of the first target object and a second DOA data set of the second target object.

The step S314 is implemented by detecting whether an angular difference between the first DOA data set and the second DOA data set is greater than a predetermined angle threshold. Specifically, when the angular difference is less than the predetermined angle threshold, it indicates that the signals emitted by the first target object and the second target object are nearly overlapping, which leads to signal interference. Conversely, when the angular difference is greater than the predetermined angle threshold, it means that the signals emitted by the first target object and the second target object are nearly non-overlapping and do not interfere with each other.

In other words, the predetermined angle threshold is the key to effectively distinguishing target objects. The predetermined angle threshold can be determined based on the Half Power Beam Width (HPBW), which represents the angular range where the beam gain drops to half of the maximum value. Reasonably, the predetermined angle threshold can be set within a range from 1 to 1.5 times a main lobe width to balance the precision of target differentiation and the coverage requirements during beam switching.

Furthermore, the main lobe width is a critical indicator for describing beam pointing performance, as it determines the beam's gain effect on signals within a specific angular range. When the angular difference between the first target object and the second target object is greater than the main lobe width, the beam can accurately align with a specific direction without affecting other targets. However, when the angular difference is smaller than the main lobe width, the first target object and the second target object may simultaneously fall within the main lobe or near its boundary, leading to signal overlap. The overlap prevents the antenna system 100 from distinguishing between different signal sources.

In other words, when the angular difference is smaller than the main lobe width, the beam's directionality cannot effectively focus on a single target, resulting in insufficient gain for a specific direction. Additionally, overlapping signals cause interference, degrading overall performance. Therefore, appropriately expanding the predetermined angle threshold to 1.5 times the main lobe width can enhance the beam's ability to differentiate between different targets and reduce signal interference between targets, so as to improve the stability and reliability of the system in multi-target scenarios.

In practice, the predetermined angle threshold needs to be established based on azimuth and elevation orientations. Therefore, it can refer to the specifications outlined in 3GPP #TR 38.820.

When the angular difference is greater than the predetermined angle threshold, the step S315A (and the subsequent related steps) is implemented.

Conversely, when the angular difference is less than the predetermined angle threshold, the step S315B is implemented.

The step S315A is implemented by adjusting two beams based on the first DOA data set and the second DOA data set to track the first target object and the second target object.

The step S315B is implemented by adjusting a single beam based on the first DOA data set to track the first target object and executing step S316A.

The step S316A is implemented by selecting, from the candidate list, one of the satellites with a signal strength data set less than the signal strength data set of the second target object and defining the satellite as a third target object based on the sorting of the signal strength data sets.

The step S316B is implemented by replacing the second target object in the steps S308 to S314 with the third target object and re- implementing the processes of the steps S308 to S314.

That is, when the angular difference between the first DOA data set of the first target object and a third DOA data set of the third target object is less than the predetermined angle threshold, the antenna control method will again select a satellite from the candidate list, based on the order of the signal strength data set, that has a value lower than that of the third target object and define the satellite as a fourth target object. The process is repeated iteratively (and so on).

Preferably, during the execution of each step by the antenna system 100, the candidate list can be updated simultaneously. For example, the antenna system 100 can allocate an additional execution thread to perform the steps related to establishing and updating the candidate list. Accordingly, the candidate list can provide real-time and up-to-date satellite candidates during the process of searching for a new target object.

### [Beneficial Effects of the Embodiments]

In conclusion, in the antenna control method and the antenna system provided by the present invention, by virtue of "inputting the baseband signal data set into a subspace tracking method to obtain a principal eigenvector data set and a principal eigenvalue data set," and "inputting the principal eigenvector data set and the principal eigenvalue data set into an ESPRIT to obtain a DOA data set of the target object," the antenna control method and antenna system can more promptly compute the current satellite positions to perform signal tracking.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated.

## Claims

1. An antenna control method applied to an antenna system (100), **characterized by** comprising:
loading an initial transmission and reception direction data set;
receiving a plurality of signal strength data sets from a plurality of satellites through an array antenna (1) based on the initial transmission and reception direction data set;
establishing a candidate list from the signal strength data sets by using a minimum strength threshold;
selecting one of the satellites that has a largest one of the signal strength data sets from the candidate list to define as a target object ;
when the signal strength data set of the target object is less than a predetermined strength threshold, switching to another one of the satellites from the candidate list as the target object;
when the signal strength data set of the target object is greater than the predetermined strength threshold, obtaining a baseband signal data set of the target object by the array antenna (1) and inputting the baseband signal data set into a subspace tracking method to obtain a principal eigenvector data set and a principal eigenvalue data set;
inputting the principal eigenvector data set and the principal eigenvalue data set into an Estimation of Signal Parameters via Rotational Invariance Techniques (ESPRIT) to obtain a Direction of Arrival (DOA) data set of the target object; and
adjusting a beam based on the DOA data set to track the target object.

2. The antenna control method according to claim 1, wherein an ephemeris data set is used to establish the initial transmission and reception direction data set.

3. The antenna control method according to claim 1, wherein, when the signal strength data set of the target object is greater than an adjustment threshold, performing reception by N×N antennas of the array antenna (1), where N is a positive integer greater than or equal to 2; wherein, when the signal strength data set of the target object is less than the adjustment threshold, performing reception using M×M antennas of the array antenna (1), where M is a positive integer greater than or equal to N.

4. The antenna control method according to claim 1, wherein during a process of tracking the target object, detecting whether the DOA data set exceeds an error range; wherein, when the DOA data set exceeds the error range, switching to another one of the satellites from the candidate list as the target object; wherein, when the DOA data set is within the error range, updating the baseband signal data set of the target object and calculating the DOA data set to adjust the beam for tracking the target object.

5. The antenna control method according to claim 1, wherein, when a switching condition is satisfied, another one of the satellites is switched as the target object; wherein the switching condition is that the signal strength data set of another one of the satellites at each time point within a predetermined time interval is greater than the signal strength data set of the target object before switching.

6. An antenna control method applied to an antenna system (100), **characterized by** comprising:
loading an initial transmission and reception direction data set;
receiving a plurality of signal strength data sets from a plurality of satellites through an array antenna (1) based on the initial transmission and reception direction data set;
establishing a candidate list from the signal strength data sets by using a minimum strength threshold;
selecting one of the satellites that has a largest one of the signal strength data sets from the candidate list to define as a target object ;
when the signal strength data set of the target object is less than a predetermined strength threshold, switching to another one of the satellites from the candidate list as the target object;
when the signal strength data set of the target object is greater than the predetermined strength threshold, dividing a plurality of antennas of the array antenna (1) into a plurality of operational sub-arrays (11), and obtaining a plurality of baseband signal data sets of the target object respectively through the operational sub-arrays (11);
inputting each of the baseband signal data sets into a subspace tracking method to obtain a principal eigenvector data set and a principal eigenvalue data set;
inputting the principal eigenvector data set and the principal eigenvalue data set into an Estimation of Signal Parameters via Rotational Invariance Techniques (ESPRIT) to obtain a Direction of Arrival (DOA) data set of the target object; and
adjusting a beam based on the DOA data set to track the target object.

7. The antenna control method according to claim 6, wherein an operational sequence is established by comparing the baseband signal data sets; and wherein the DOA data sets are loaded based on the operational sequence to adjust the beam.

8. An antenna system (100), **characterized by** comprising:
an array antenna (1) configured to receive from a plurality of satellites to obtain a plurality of signal strength data sets;
a dynamic adjustment module (2) connected to the array antenna (1), wherein the dynamic adjustment module (2) is configured to control the array antenna (1) to face one of the satellites based on an initial transmission and reception direction data set and a Direction of Arrival (DOA) data set;
a tracking module (3) connected to the array antenna (1) and the dynamic adjustment module (2), wherein, when the dynamic adjustment module (2) loads the initial transmission and reception direction data set, the tracking module (3) is configured to establish a candidate list from the signal strength data sets by using a minimum strength threshold and to select one of the satellites that has a largest one of the signal strength data sets from the candidate list to define as a target object;
wherein, when the tracking module (3) detects that the signal strength data set of the target object is less than a predetermined strength threshold, the tracking module (3) switches to another one of the satellites from the candidate list as the target object; and wherein, when the tracking module (3) detects that the signal strength data set of the target object is greater than the predetermined strength threshold, the tracking module (3) outputs a computation command;
a computation module (4) connected to the array antenna (1), the tracking module (3), and the dynamic adjustment module (2), wherein, when the computation module (4) receives the computation command, the computation module (4) obtains a baseband signal data set of the target object by the array antenna (1) and inputs the baseband signal data set into a subspace tracking method to obtain a principal eigenvector data set and a principal eigenvalue data set; wherein the computation module (4) inputs the principal eigenvector data set and the principal eigenvalue data set into an Estimation of Signal Parameters via Rotational Invariance Techniques (ESPRIT) to obtain a Direction of Arrival (DOA) data set of the target object; and wherein the computation module (4) replaces the initial transmission and reception direction data set with the DOA data set, so that the dynamic adjustment module (2) controls the array antenna (1) to face the target object based on the DOA data set.

9. The antenna system (100) according to claim 8, wherein the dynamic adjustment module (2) establishes the initial transmission and reception direction data set using an ephemeris data set.

10. The antenna system (100) according to claim 8, wherein, when the signal strength data set of the target object is greater than an adjustment threshold, the computation module (4) outputs a first adjustment command to the array antenna (1); wherein, when the signal strength data set of the target object is less than the adjustment threshold, the computation module (4) outputs a second adjustment command to the array antenna (1); wherein, when the array antenna (1) receives the first adjustment command, the array antenna (1) performs reception by N×N antennas, where N is a positive integer greater than or equal to 2; and wherein, when the array antenna (1) receives the second adjustment command, the array antenna (1) performs reception by M×M antennas, where M is a positive integer greater than or equal to N.

11. The antenna system (100) according to claim 8, further comprising a correction module (5) electrically coupled to the computation module (4) and the dynamic adjustment module (2); wherein the correction module (5) is configured to detect whether the DOA data set exceeds an error range, when the correction module (5) detects that the DOA data set exceeds the error range, the correction module (5) outputs a correction command to the dynamic adjustment module (2), so that the dynamic adjustment module (2) switches to another one of the satellites from the candidate list as the target object; and wherein, when the correction module (5) detects that the DOA data set is within the error range, the correction module (5) outputs a continuation command to the computation module (4), so that the computation module (4) updates the baseband signal data set of the target object and calculates the DOA data set to adjust the beam for tracking the target object.

12. The antenna system (100) according to claim 8, wherein the tracking module (3) switches to another one of the satellites as the target object when a switching condition is satisfied; wherein the switching condition is that the signal strength data set of another one of the satellites at each time point within a predetermined time interval is greater than the signal strength data set of the target object before switching.

13. An antenna system (100), **characterized by** comprising:
an array antenna (1) configured to receive from a plurality of satellites to obtain a plurality of signal strength data sets, wherein the array antenna (1) includes a plurality of operational sub-arrays (11), and each of the operational sub-arrays (11) has a plurality of antennas;
a dynamic adjustment module (2) connected to the array antenna (1), wherein the dynamic adjustment module (2) is configured to control the array antenna (1) to face one of the satellites based on an initial transmission and reception direction data set and a Direction of Arrival (DOA) data set;
a tracking module (3) connected to the array antenna (1) and the dynamic adjustment module (2), wherein, when the dynamic adjustment module (2) loads the initial transmission and reception direction data set, the tracking module (3) is configured to establish a candidate list from the signal strength data sets by using a minimum strength threshold and to select one of the satellites that has a largest one of the signal strength data sets from the candidate list to define as a target object;
wherein, when the tracking module (3) detects that the signal strength data set of the target object is less than a predetermined strength threshold, the tracking module (3) switches to another one of the satellites from the candidate list as the target object; and wherein, when the tracking module (3) detects that the signal strength data set of the target object is greater than the predetermined strength threshold, the tracking module (3) outputs a computation command;
a computation module (4) connected to the array antenna (1), the tracking module (3), and the dynamic adjustment module (2), wherein, when the computation module (4) receives the computation command, the computation module (4) obtains a plurality of baseband signal data sets of the target object respectively using the operational sub-arrays (11) and inputs the baseband signal data sets into a subspace tracking method to respectively obtain a principal eigenvector data set and a principal eigenvalue data set; wherein the computation module (4) inputs the principal eigenvector data set and the principal eigenvalue data set into an Estimation of Signal Parameters via Rotational Invariance Techniques (ESPRIT) to obtain a Direction of Arrival (DOA) data set of the target object; and wherein the computation module (4) replaces the initial transmission and reception direction data set with the DOA data set, so that the dynamic adjustment module (2) controls the array antenna (1) to face the target object based on the DOA data set.

14. The antenna system (100) according to claim 13, wherein the computation module (4) compares the signal strength data sets to establish an operational sequence and inputs the corresponding DOA data set to replace the initial transmission and reception direction data set based on the operational sequence.
